# EUROPÄISCHE PATENTSCHRIFT

(11) **EP 1 157 523 B1**
(45) Veröffentlichungstag und Bekanntmachung des Hinweises auf die Patenterteilung: **27.02.2008**
(21) Anmeldenummer: 00926671.9
(22) Anmeldetag: 08.03.2000
(51) Int. Cl.: H04L 29/06

(54) **VERFAHREN ZUR VERGABE EINER DIENSTGÜTE FÜR EINEN PAKETSTROM**
METHOD FOR ASSIGNING A QUALITY OF SERVICE FOR A PACKET FLOW
PROCEDE PERMETTANT D'AFFECTER UNE QUALITE DE SERVICE A UN FLUX DE PAQUETS

(30) Priorität: 10.03.1999 DE 19910585
(43) Veröffentlichungstag der Anmeldung: 28.11.2001
(73) Patentinhaber: Nokia Siemens Networks GmbH & Co. KG, 81541 München (DE)
(72) Erfinder: PREHOFER, Christian, D-81477 München (DE); RANSMAYR, Viktor, D-80799 München (DE); BITZINGER, Rudolf, D-81476 München (DE)
(86) Internationale Anmeldenummer: PCT/DE2000/000728
(87) Internationale Veröffentlichungsnummer: WO 2000/054459

(56) Entgegenhaltungen:
- WO-A-99/05828
- NANDY B ET AL: "CONNECTIONLESS APPROACH TO PROVIDING QOS IN IP NETWORKS" INTERNATIONAL CONFERENCE ON HIGH PERFORMANCE NETWORKING,XX,XX, 21 September 1998 (1998-09-21), pages 363-379, XP002137755
- THOM G A: "H. 323: THE MULTIMEDIA COMMUNICATIONS STANDARD FOR LOCAL AREA NETWORKS" IEEE COMMUNICATIONS MAGAZINE,US,IEEE SERVICE CENTER. PISCATAWAY, N.J, vol. 34, no. 12, 1 December 1996 (1996-12-01), pages 52-56, XP000636454 ISSN: 0163-6804

## Beschreibung

Zeitgemäße paketorientierte Netze - auch 'Datennetze' genannt - sind bisher im wesentlichen auf die Übermittlung von in der Fachwelt auch als 'Datenpaketströme' bezeichneten Paketströmen ausgelegt. Hierbei ist üblicherweise keine garantierte Übermittlungs-Dienstgüte erforderlich. So erfolgt die Übermittlung der Datenpaketströme z.B. mit schwankenden zeitlichen Verzögerungen, da die einzelnen Datenpakete der Datenpaketströme üblicherweise in der Reihefolge ihres Netzzugangs übermittelt werden, d.h. die zeitlichen Verzögerungen werden umso größer, je mehr Pakete von einem Datennetz zu übermitteln sind. In der Fachwelt wird die Übermittlung von Daten deshalb auch als Übermittlungsdienst ohne Echtzeitbedingungen bzw. als 'Non-Realtime-Service' bezeichnet.

Im Zuge der Konvergenz von leitungsorientierten Sprach- und paketorientierten Datennetzen werden zunehmend Echtzeitdienste bzw. 'Realtime-Services', d.h. Übermittlungsdienste unter Echtzeitbedingungen wie z.B. die Übermittlung von Sprach- oder Bewegtbildinformationen, ebenfalls in paketorientierten Netzen realisiert, d.h. die Übermittlung der bisher üblicherweise leitungsorientiert übermittelten Echtzeitdienste erfolgt in einem konvergenten Sprach-Daten-Netz paketorientiert, d.h. in Paketströmen. Diese werden auch 'Echtzeitpaketströme' genannt. Hierbei ergibt sich das Problem, daß für eine mit einer leitungsorientierten Übermittlung qualitativ vergleichbare paketorientierte Übermittlung eines Echtzeitdienstes eine hohe Dienstgüte erforderlich ist. Insbesondere ist eine minimale - z.B. < 200 ms - Verzögerung ohne Schwankungen der Verzögerungszeit wichtig, da Echtzeitdienste im allgemeinen einen kontinuierlichen Informationsfluß erfordern und einen Informationsverlust, z.B. bedingt durch Paketverluste, nicht durch ein nochmaliges Übermitteln der verworfenen Pakete ausgleichen können. Da diese Dienstgüte-Anforderungen grundsätzlich für alle Netze mit paketorientierter Übermittlung gelten, sind sie unabhängig von der konkreten Ausgestaltung eines paketorientierten Netzes. Die Pakete können folglich als Internet-, X.25- oder Frame-Relay-Pakete, aber auch als ATM-Zellen ausgebildet sein.

Für die Übermittung von Sprach- und Bildinformationen über das paketorientierte Internet - auch 'VoIP' genannt - sind in den internationalen Standards - insbesondere den H.323 Standards - Protokolle für eine Übermittlung durch das Internet vorgeschlagen. "H.323: The multimedia communications standard for local area networks", Gary A. Thom, IEEE Communications, December 1996 zeigt einen überblick über H.323. Hierbei wird das Netz in mehrere 'H.323 Zonen' gegliedert, in denen jeweils sogenannte 'Gatekeeper' zur
- Umsetzung von E.164-Telephonnummern auf Rechnernamen bzw. deren Internetadressen
- Zulässigkeitsprüfung für eingehende und ausgehende Gespräche
- Verwaltung von Ubermittlungskapazitäten
- Registrierung von H.323-Endgeräten
vorgesehen sind.

Da in den aktuellen H.323 Standards jedoch keine garantierte Dienstgüte für die Internet-Übermittlung vorgesehen ist, hat die derzeitige VoIP-Technik den Nachteil, daß die Qualität der Sprach- und Bildübermittlung abnimmt, wenn die Zahl der von dem Internet zu übermittelnden Pakete ansteigt. In K. Nichols, "Differentiated Services Operational Model and Definitions", IETF Draft, 1998 ist hierzu vorgeschlagen, im bisher keine Dienstgüten garantierenden paketorientierten Internet mehrere Service-Klassen einzuführen. Hierbei werden die einzelnen Paketströme jeweils einer bestimmten Service-Klasse zugeordnet und von den Übermittlungsknoten des Internets entsprechend ihrer Service-Klasse gegenüber Paketen anderer Service-Klassen bevorzugt oder benachteiligt übermittelt. Somit kann die für die Echtzeitdienste geforderte Dienstgüte beispielsweise dadurch gewährleistet werden, daß die zugehörigen Echtzeitpaketströme einer Service-Klasse zugeordnet werden, die von den Knoten des Internets bevorzugt übermittelt wird - die Echtzeitpaketströme sind somit gegenüber den Datenpaketströmen priorisiert.

Bei einer prioritätsgesteuerten Übermittlung ist grundsätzlich zumindest für den priorisierten Verkehr eine Netzzugangskontrolle erforderlich, da die geforderte Dienstgüte nur dann gewährleistet werden kann, wenn dem Netz nicht mehr priorisierte Pakete zugeführt werden als von dem Netz maximal übermittelt werden können. Hierzu sind für das Internet mit mehreren Service-Klassen Netzübergangseinrichtungen - auch 'Edgedevices' genannt - vorgeschlagen, von denen die Netzzugangskontrolle bewirkt wird. Hierbei können die Edgedevices
- Prioritätskennzeichen in den Paketen entsprechend der Priorität ihrer Paketströme setzen
- Prioritätskennzeichen von Paketströmen kontrollieren und gegebenenfalls korrigieren, falls die Pakete bereits mit Prioritäten gekennzeichnet sind
- die Übermittlungskapazität von priorisierten Paketströmen kontrollieren.

Nicht geregelt ist bisher die Vergabe der Dienstgüte, d.h. es besteht das Problem, wie Dienstgüten für die Paketströme gefordert, vergeben und vor deren Übermittlung den Edgedevices mitgeteilt werden. Bekannt ist ein Verfahren, bei dem mit Hilfe eines Reservierungsprotokolls RSVP eine für die Übermittlung eines Paketstrom erforderliche Dienstgüte von jedem Übermittlungsknoten eines Kommunikationsnetzes angefordert wird und die Übermittlung des Paketstroms unterbleibt, sofern zumindest ein Übermittlungsknoten die angeforderte Dienstgüte nicht erbringen kann. Hierbei muß das Reservierungsprotokoll RSVP in jedem der Ubermittlungsknoten realisiert werden.

Der Erfindung liegt somit die Aufgabe zugrunde, ein Verfahren zur Vergabe einer Dienstgüte für die Übermittlung eines Paketstroms über ein paketorientiertes Kommunikationsnetz mit Service-Klassen auszugestalten. Die Aufgabe wird durch die Merkmale des Patentanspruchs 1 gelöst.

Der wesentliche Aspekt der Erfindung besteht in der Vergabe einer Dienstgüte für einen Dienst, bei dem der Dienst in zumindest einem Pakete und/oder Paketströme in Abhängigkeit von Dienstgüten paketorientiert übermittelnden Kommunikationsnetz realisiert ist, eine Nutzung des Dienstes bei einer Steuerung beantragt wird, und von der Steuerung für die beantragte Nutzung des Dienstes die Dienstgüte in Abhängigkeit von dem Dienst und/oder der beantragten Nutzung des Dienstes vergeben wird. Der wesentliche Vorteil der Erfindung ist darin zu sehen, daß die Nutzung des Dienstes und nicht die Zuteilung einer Dienstgüte beantragt wird. Somit kann die Steuerung den beantragten Dienst mit unterschiedlichen Dienstgüten erteilen, z.B. mit hoher Dienstgüte bei ausreichender Übermittlungskapazität im Kommunikationsnetz und mit niedriger Dienstgüte bei unzureichender Übermittlungskapazität im Kommunikationsnetz. Weiterhin wird die Dienstgüte vorteilhaft paketstromindividuell vergeben. Hierin liegt ein besonderer Vorteil, sofern in dem Kommunikationsnetz keine Übermittlung mit garantierter paketstromindividueller Dienstgüte vorgesehen ist.

Gemäß einer Ausgestaltung des erfindungsgemäßen Verfahrens ist vorgesehen, daß die Nutzung des Dienstes ohne Angabe der Dienstgüte beantragt wird - Anspruch 2. Somit ist für den Antrag der Nutzung des Dienstes vorteilhaft keine Ermittlung der Dienstgüte erforderlich.

Nach einer Weiterbildung des erfindungsgemäßen Verfahrens ist der Dienst als Übermittlung von Informationen, insbesondere Sprachinformationen ausgebildet - Anspruch 3. Entsprechend einer Ausgestaltung des erfindungsgemäßen Verfahrens wird bei der Nutzung des Dienstes von dem Kommunikationsnetz zumindest ein dem Dienst zugeordneter Paketstrom mit der Dienstgüte übermittelt- Anspruch 5. Somit kann die Erfindung vorzugsweise zur Erfüllung der besonderen Dienstgüte-Anforderungen bei der Übermittlung von Sprachinformationenen über eine paketorientiertes Kommunikationsnetz, insbesondere ein integriertes Sprach-Daten-Netz angewandt werden.

Gemäß einer Variante des erfindungsgemäßen Verfahrens wird von der Steuerung geprüft, ob die beantragte Nutzung des Dienstes von dem Kommunikationsnetz mit der vorgesehenen Dienstgüte erbracht werden kann - Anspruch 4. Somit erfolgt die Prüfung durch die Steuerung und nicht durch das Kommunikationsnetz, wodurch das Kommunikationsnetz entlastet wird.

Gemäß einer Weiterbildung des erfindungsgemäßen Verfahrens ist vorgesehen, daß einer Netzübergangseinrichtung von der Steuerung die Dienstgüte des Paketstroms mitgeteilt wird, bevor von der Netzübergangseinrichtung der Paketstrom mit seiner Dienstgüte an das paketorientierte Kommunikationsnetz übermittelt wird - Anspruch 6. Hierdurch wird vorteilhaft bewirkt, daß der Paketstrom von der Netzübergangseinrichtung mit der zugeteilten Dienstgüte an das Kommunikationsnetz übermittelt wird.

Entsprechend einer Weiterbildung des erfindungsgemäßen Verfahrens ist für die Zulässigkeit des Paketstroms zumindest eine Bestätigung der mitgeteilten Dienstgüte erforderlich - Anspruch 8. Somit wird sichergestellt, daß der Paketstrom nur dann zulässig ist, wenn die zugeteilte Dienstgüte übermittelt werden kann. Somit kann die Mitteilung und nachfolgende Bestätigung der Dienstgüte integriert mit der Zulässigkeitsprüfung erfolgen, wodurch die Zulässigkeitsprüfung und die Zuteilung der Dienstgüte vorteilhaft als eine Einheit, d.h. konsistent bewirkt werden.

Nach einer Ausgestaltung des erfindungsgemäßen Verfahrens ist vorgesehen, daß die Mitteilung der Dienstgüte mit Hilfe von Mitteilungs-Paketen erfolgt wird - Anspruch 9. Somit kann die Übermittlung der Mitteilung vorteilhaft auf die gleiche Weise erfolgen wie die Übermittlung des Paketstroms.

Gemäß einer Ausgestaltung des erfindungsgemäßen Verfahrens ist in dem Kommunikationsnetz zumindest ein hohe Dienstgüte und eine niedrige Dienstgüte vorgesehen - Anspruch 10. Hierbei ist vorgesehen, daß die Paketströme mit hoher Dienstgüte von der Netzübergangseinrichtung bevorzugt übermittelt werden - Anspruch 11. Somit können Paketströme, die Informationen in Echtzeit, d.h. mit möglichst geringen Verzögerungzeiten, übermitteln sollen bevorzugt gegenüber Paketströmen übermittelt werden, die Informationen mit variablen Verzögerungszeiten übermitteln können. Beispiele für Informationen, die mit hoher Dienstgüte übermittelt werden, sind Sprach- oder Bildtelephonie. Beispiele für Informationen, die mit niedriger Dienstgüte übermittelt werden, sind EMail, Dateien oder Internet-Seiten.

Nach einer Ausgestaltung des erfindungsgemäßen Verfahrens ist vorgesehen, daß in den Paketen der Paketströme ein Dienstgütekennzeichen vorgesehen ist - Anspruch 12. Hierbei werden von der Netzübergangseinrichtung die von ihr mit hoher Dienstgüte zu übermittelnden Paketströme mit einem die hohe Dienstgüte repräsentierenden ersten Dienstgütekennzeichen und die verbleibenden Paketströme mit einem die niedrige Dienstgüte repräsentierenden zweiten Dienstgütekennzeichen übermittelt - Anspruch 13. Durch die Übermittlung der zugeteilten Dienstgüte in den Paketen des Paketstroms kann somit durch Auslesen des Dienstgütekennzeichens in den Übermittlungsknoten des Kommunikationsnetzes die zugeteilte Dienstgüte während der Übermittlung des Paketstroms ermittelt werden, wodurch keine Hinterlegung der zugeteilten Dienstgüte in den Übermittlungsknoten erforderlich ist.

Entsprechend einer Weiterbildung des erfindungsgemäßen Verfahrens wird die Dienstgüte mit Hilfe von Prioritäten bewirkt, wobei die hohe Dienstgüte als hohen Priorität und die niedrige Dienstgüte als niedrigen Priorität und das Dienstgutekennzeichen als Prioritätskennzeichen angegeben ist - Anspruch 14. Somit kann die bevorzugte Übermittlung der Paketströme mit hoher Dienstgüte durch bekannte Mechanismen zur Prioritätssteuerung auf einfache Weise realisiert werden.

Entsprechend einer Ausgestaltung des erfindungsgemäßen Verfahrens sind die Netzübergangseinrichtung als Edgedevice - Anspruch 7 -, die Pakete als Internet-Pakete - Anspruch 15 - und die Steuerung als Gatekeeper gemäß dem internationalen Standard H.323 ausgebildet- Anspruch 16. Somit kann das erfindungsgemäße Verfahren vorteilhaft in die bestehende Infrastruktur eines zeitgemäßen Internets eingefügt werden. Zudem kann die Zuteilung der Dienstgüte in Abhängigkeit von der Zulässigkeitsprüfung des Gatekeepers realisiert werden kann.

Das erfindungsgemäße Verfahren wird im folgenden anhand von zwei Figuren näher erläutert. Dabei zeigt
- Figur 1: in einem Blockschaltbild die erfindungsgemäße Übermittlung von priorisierten Paketströmen über ein Kommunikationsnetze mit Dienstgüten, und
- Figur 2: in einem Flußdiagramm die Integration des erfindungsgemäßen Verfahrens in eine Übermittlung gemäß den internationalen Standards H.323, H.225 und H.245.

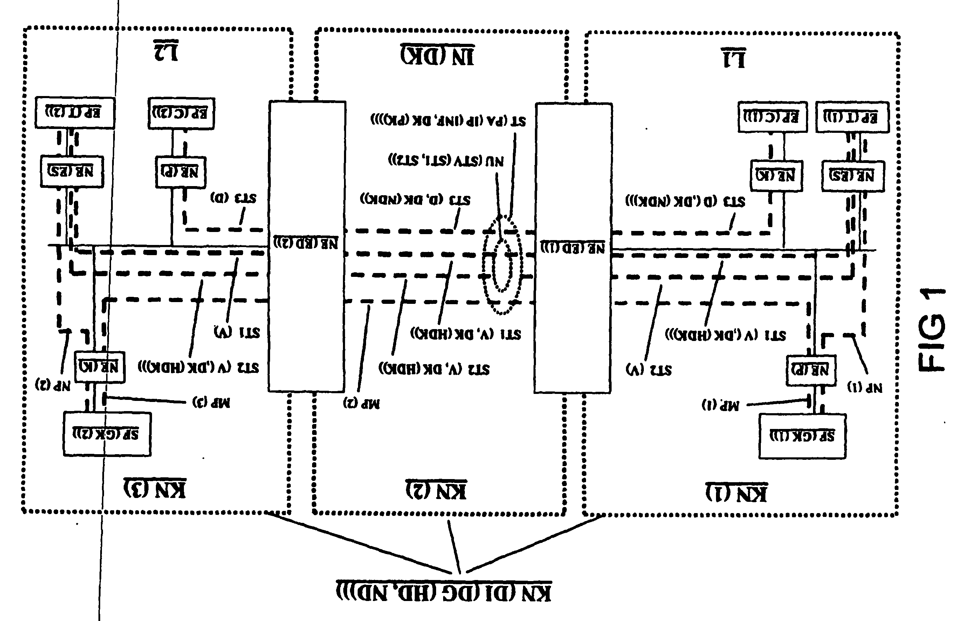

In Figur 1 sind beispielhaft drei Kommunikationsnetze KN dargestellt, die beispielsweise als paketorientierte konvergente Sprach-Daten-Netze ausgebildet sind. Hierbei ist das erste Kommunikationsnetz KN (1) als erstes lokales Netz - auch 'Local Area Network' bzw. 'LAN' genannt - L1, das zweite Kommunikationsnetz KN (2) als Internet IN und das dritte Kommunikationsnetz KN (3) als zweites LAN L2 ausgebildet. In den Kommunikationsnetzen KN kann die Übermittlung von aus einer Folge von Paketen PA bestehenden Paketströmen ST in Abhängigkeit von Dienstgüten DG erfolgen, wobei jeweils zumindest eine hohe Dienstgüte HD und eine niedrige Dienstgüte ND vorgesehen ist. Von den Paketen PA werden Informationen INF übermittelt, die beispielsweise Sprachinformationen V oder Daten D repräsentieren. Die Kommunikationsnetze KN sind durch Netzübergangseinrichtung NE miteinander verbunden, wobei das Internet IN durch eine erste Netzübergangseinrichtung NE (ED (1)) mit dem lokalen Netz L1 und durch eine zweite Netzübergangseinrichtung NE (ED (2)) mit dem LAN L2 verbunden ist und hierbei die Netzübergangseinrichtung NE (ED (1)) beispielsweise als erstes Edgedevice ED (1) und die Netzübergangseinrichtung NE (ED (2)) als zweites Edgedevice ED (2) ausgebildet ist. An das LAN L1 sind zudem ein erstes Telephon T (1) und ein erster Rechner C (1), an das LAN L2 ein zweites Telephon T (2) und ein zweiter Rechner C (2) mit Netzübergangseinrichtungen NE angeschlossen, die beispielsweise als Einsteckkarten K, als elektrische Schaltungen ES oder als Programme P realisiert sind. Zwischen den beiden Telephonen T (1), T (2) werden Sprachinformationen V in Sprachpaketströmen STV - von dem Telphon T (1) zu dem Telephon T (2) in einem ersten Paketstrom ST1 und in umgekehrter Richtung in einem zweiten Paketstrom ST2 - und von dem Rechner C (1) zu dem Rechner C (2) werden Daten D von einem dritten Paketstrom ST3 übermittelt. Die Pakete PA weisen hierbei zumindest in dem Internet IN Dienstgütekennzeichen DK auf, die in den Pakete PA der Paketströme ST1, ST2 als hohe Dienstgüte HD repäsentierende Dienstgütekennzeichen HDK und in den Paketen PA des Paketstroms ST3 als niedrige Dienstgüte ND repäsentierende Dienstgütekennzeichen NDK ausgebildet sind. Die Dienstgütekennzeichen DK sind hierbei beispielsweise als Prioritätskennzeichen PK realisiert. In jedem der beiden LAN L1, L2 ist zudem eine Steuerung SF vorgesehen, die gemäß dem internationalen VoIP-Standard H.323 in einem Gatekeeper GK zur Steuerung der Übermittlung von Sprachinformationen V realisiert ist, wobei in dem LAN L1 ein erster Gatekeeper GK (1) und in dem LAN L2 ein zweiter Gatekeeper GK (2) angeordnet ist, die jeweils mit Netzübergangseinrichtungen NE mit den LAN L1, L2 verbunden sind. Zwischen den Gatekeepern GK und den Edgedevices ED werden Meldepakete MP ausgetauscht, wobei zwischen dem Gatekeeper GK (1) und der Netzübergangseinrichtung NE (ED (1)) erste Meldepakete M (1), zwischen den Netzübergangseinrichtungen NE (ED (1)), NE (ED (2)) optional zweite Meldepakete MP (2) und zwischen dem Gatekeeper GK (2) und der Netzübergangseinrichtung NE (ED (2)) dritte Meldepakete M (3) übermittelt werden. Zwischen den Telephonen T und den Gatekeepern GK werden zudem Dienstnutzungspakete NP übermittelt, wobei zwischen dem Telephon T (1) und dem Gatekeeper GK (1) erste Dienstnutzungspakete NP (1) und zwischen dem Telephon T (2) und dem Gatekeeper GK (2) zweite Dienstnutzungspakete NP (2) übermittelt werden.

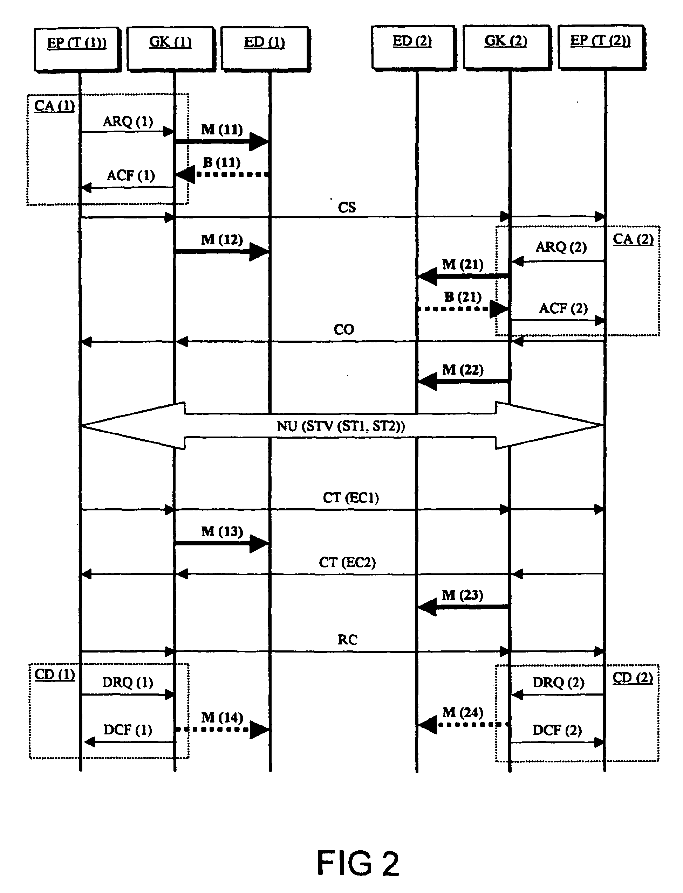

In Figur 2 ist beispielhaft in einem Flußdiagramm der bei einer Übermittlung von VoIP entsprechend den VoIP Standards H.225 und H.245 stattfindende Nachrichtenaustausch zwischen den als Telephone T (1) und T (2) realisierten Endpunkten EP, dem ersten Gatekeeper GK (1), dem zweiten Gatekeeper GK (2) sowie der erfindungsgemäße Informationsaustausch zwischen den beiden Gatekeepern GK (1), GK (2) und den beiden Netzübergangseinrichtungen NE (ED (1)), NE (ED (2)) dargestellt, wobei zusätzlich zu dem Nachrichtenaustausch entsprechend den VoIP Standards H.225 und H.245 erfindungsgemäße Meldungen M und Bestätigungen B vorgesehen sind. Hierbei werden - vorzugweise mit den Meldepaketen MP (1) - von dem Gatekeeper GK (1) zu der Netzübergangseinrichtung NE (ED (1)) eine erste Meldung M (11), eine zweite Meldung M (12), eine dritte Meldung M (13) und eine vierte Meldung M (14), sowie von der Netzübergangseinrichtung NE (ED (1)) zu dem Gatekeeper GK (1) eine erste Bestätigung B (11) Übermittelt. Analog werden - vorzugweise mit den Meldepaketen MP (3) - erfindungsgemäß von dem Gatekeeper GK (2) zu der Netzübergangseinrichtung NE (ED (2)) eine fünfte Meldung M (21), eine sechste Meldung M (22), eine siebte Meldung M (23) und eine achte Meldung M (24), sowie von der Netzübergangseinrichtung NE (ED (2)) zu dem Gatekeeper GK (2) eine zweite Bestätigung B (21) übermittelt.

Für das Ausführungsbeispiel wird angenommen, daß zumindest in dem Internet IN mehrere Dienstgüten DG vorgesehen sind, die dem Internet durch die in den Internet-Paketen IP vorgesehenen Diestgütekennzeichen DK angezeigt werden. Zudem werden von dem Rechner C (1) bereits Daten D durch den Paketstrom ST3 mit niedriger Dienstgüte ND an den Rechner C (2) übermittelt. Zwischen zwei Endpunkten EP, beispielsweise den Telephonen T (1), T (2) sollen nun zusätzlich Sprachinformationen V übermittelt werden, wobei dies zumindest über das Internet IN mit einer hohen Dienstgüte HD erfolgen soll. Hierzu wird von dem Telephon T (1) nach Eingabe einer gemäß dem internationalen Standard E.164 strukturierten Telephonnummer eine Verbindung mit dem Telephon T (2) beantragt. Dies wird auch 'Call Admission' CA genannt. Während der ersten Call Admission CA (1) wird in LAN L1 die Übermittlung des Paketstroms ST1 von Telephon T (1) zu Telephon T (2) beantragt, indem dem Gatekeeper GA (1) von dem Telephon T (1) eine erste Admission-Request-Nachricht ARQ (1) gesendet wird. Von dem Gatekeeper GK (1) wird hierauf zumindest die Telephonnummer in die Internet-Adresse des Telephon T (2) übersetzt. Erfindungsgemäß wird weiterhin von dem Gatekeeper GK (1) dem Paketstrom ST1 die hohe Dienstgüte HD zugewiesen und der Netzübergangseinrichtung NE (ED (1)) mit der Meldung M (11) mitgeteilt. Beispielsweise könnte eine Übermittlungskapazität von 64 kbps angefordert werden. Anschließend wird dem Telephon T (1) von dem Gatekeeper GK (1) eine erste Admission-Confirmation-Nachricht ACF (1) Übermittelt, die optional in Abhängigkeit von der von der Netzübergangseinrichtung NE (ED (1)) an den Gatekeeper GK (1) als Antwort zurückgesendeten Bestätigung B (11) erfolgen kann. Hierauf wird von dem Telephon T (1) der Aufbau einer Verbindung zu dem Telephon T (2) initiiert, indem es dem Telephon T (2) eine Call-Setup-Nachricht CS entsprechend dem international standardisierten Kontrollprotokoll H.225 sendet. Hierbei werden u.a. auch dem Gatekeeper GK (1) die Protokoll- und Portnummer des Telephons T (1) mitgeteilt, die der Netzübergangseinrichtung NE (ED (1)) von dem Gatekeeper GK (1) mit der Meldung M (12) mitgeteilt werden.

Da wegen des bidirektionalen Charakters einer Sprachverbindung zwei Sprachpaketströme STV - der Paketstrom ST1 für die Übermittlung der Sprachinformation V von dem Telephon T (1) zu dem Telephon T (2) und der Paketstrom ST2 für die Übermittlung der Sprachinformation V von dem Telephon T (2) zu dem Telephon T (1) - erforderlich sind, wird nach Empfang der Call-Setup-Nachricht CS von dem Telephon T (2) der Paketstrom ST2 beantragt. Der Aufbau des Paketstroms ST2 erfolgt analog zum Aufbau des Paketstroms ST1. Von dem Telephon T (2) wird folglich eine zweite Call Admission CA (2) durchgeführt, wobei von dem Gatekeeper GK (2) nach Empfang einer zweiten Admission-Request-Nachricht ARQ (2) der Netzübergangseinrichtung NE (ED (2)) mittels der erfindungsgemäßen Meldung M (21) die angeforderte hohe Dienstgüte HD mitgeteilt wird. Analog kann diese mit der Bestätigung B (21) quittiert werden. Die Call Admission CA wird durch eine zweite Admission-Confirmation-Nachricht ACF (2) abgeschlossen, worauf dem ersten Telephon T (1) von dem zweiten Telephon T (2) eine Connect-Nachricht CO gesendet wird. Zum Abschluß des Verbindungsaufbaus werden der Netzübergangseinrichtung NE (ED (2)) mit der Meldung M (22) die Protokollnummer und die Portnummer des Telephons T (2) mitgeteilt. Zwischen den beiden Telephonen T (1), T (2) werden nun durch die Paketströme ST1, ST2 die Sprachinformationen V mit hoher Dienstgüte übermittelt, d.h. die Übermittlung erfolgt bevorzugt gegenüber der Übermittlung des mit niedriger Dienstgüte ND zu übermittelnden Paketstroms ST3.

Nach Beendigung des Gesprächs wird beispielsweise von dem Telephon T (1) der Verbindungsabbau, auch - 'End Session' genannt - eingeleitet, indem von ihm an das Telephon T (2) eine erste Call-Teardown-Nachricht CT (1) gemäß dem internationalen Standard H.245 gesendet wird. Nach Empfang dieser Nachricht kann von dem Gatekeeper GK (1) der Netzübergangseinrichtung NE (ED (1)) der Verbindungsabbau durch die Meldung M (13) frühestens mitgeteilt werden, worauf von der Netzübergangseinrichtung NE (ED (1)) die reservierte hohe Dienstgüte HD freigegeben werden könnte. Von dem Telephon T (2) wird nach Empfang der ersten Call-Teardown-Nachricht CT (1) ebenfalls eine zweite Call-Teardown-Nachricht CT (2) gesendet, worauf auch der Netzübergangseinrichtung NE (ED (2)) die Meldung M (23) von dem Gatekeeper GK (2) zugesendet werden könnte. Die Meldungen M (13), M (23) enthalten beispielsweise die Internet-Adressen und Portnummern der beiden Telephone T (1) und T (2), Protokollnummern und/oder die von den Sprachpaketströmen STV benötigten übermittlungskapazitäten. Nach Empfang der Call-Teardown-Nachricht CT (2) wird von dem Telephon T (1) eine Release-Complete-Nachricht RC gesandt und abschließend ein erster Call Disengage CD (1) eingeleitet, indem dem Gatekeeper GK (1) eine erste Disengage-Request-Nachricht DRQ (1) übermittelt wird. Von dem Gatekeeper GK (1) wird hierauf der Netzübergangseinrichtung NE (ED (1)) mit der Meldung M (14) das Ende der Übermittlung des Paketstroms ST1 mitgeteilt und der Call Disengage CD (1) durch Senden einer ersten Disengage-Confirm-Nachricht DCF (1) abgeschlossen. Von dem Telephon T (2) wird nach Empfang der Release-Complete-Nachricht RC auf analoge Weise ein zweiter Call Disengage CD (2) initiiert, indem dem Gatekeeper GK (2) eine zweite. Disengage-Request-Nachricht DRQ (2) übermittelt wird. Von dem Gatekeeper GK (2) wird hierauf der Netzübergangseinrichtung NE (ED (2)) mit der Meldung M (24) das Ende der Übermittlung des Paketstroms ST2 mitgeteilt und der Call Disengage CD (2) durch Senden einer zweiten Disengage-Confirm-Nachricht DCF (2) abgeschlossen.

Gemäß einer Variante der Erfindung wird der Netzübergangseinrichtung NE (ED (2)) die hohe Dienstgüte HD des Paketstroms ST1 mit den Meldungspaketen MP (2) mitgeteilt. Von der Netzübergangseinrichtung NE (ED (2)) kann somit vorteilhaft der Paketstrom ST1 bevorzugt übermittelt werden, d.h. sowohl innerhalb der Netzübergangseinrichtung NE (ED (2)) selbst als auch, sofern die in dem LAN L2 technisch vorgesehen ist, durch bevorzugte Übermittlung an das LAN L2 und/oder in dem LAN L2.

Gemäß einer weiteren Variante der Erfindung erfolgt die Mitteilung der Dienstgüten DG an die Netzübergangseinrichtungen NE (ED (1)), NE (ED (2)) und die Gatekeeper GK mit Hilfe eines Reservierungsprotokolls, beispielsweise durch das Reservierungsprotokoll RSVP.

Abschließend sei darauf hingewiesen, daß die Erfindung nicht auf ein Internet IN beschränkt ist, sondern in jedem paketorientierten Kommunikationsnetz KN mit Dienstgüten DG angewandt werden kann. Beispielsweise ist die Anwendung in lokalen Netzen L1, L2 vorgesehen. Dies ist in Figur 1 dadurch angedeutet, daß von den Steuerungen SF, den Rechnern C (1), C (2) und den Telephonen T (1), T (2) auf die lokalen Netze L1, L2 ebenfalls mit Hilfe von Netzübergangseinrichtungen NE zugegriffen wird, wobei durch eine erfindungsgemäße Konfiguration der Netzübergangseinrichtungen NE durch die Steuerungen SF eine priorisierte, d.h. mit hoher Dienstgüte HD erfolgende Übermittlung von Sprachinformationen V in den lokalen Netzen L1, L2 bewirkt werden kann.

## Patentansprüche

1. Verfahren zur Vergabe einer Dienstgüte (DG) für einen Dienst (DI), der in zumindest einem Pakete (PA) und/oder Paketströme (ST) in Abhängigkeit von Dienstgüten (DG) paketorientiert übermittelnden Kommunikationsnetz (KN) realisiert ist, **gekennzeichnet durch** folgende Schritte:
(a) eine Nutzung (NU) des Dienstes wird bei einer Steuerung (SF) beantragt;
(b) von der Steuerung wird für die beantragte Nutzung des Dienstes die Dienstgüte in Abhängigkeit von dem Dienst und/oder der beantragten Nutzung des Dienstes vergeben wobei von der Steuerung (SF) geprüft wird, ob die beantragte Nutzung (NU) des Dienstes (DI) von dem Kommunikationsnetz (KN) mit der vorgesehenen Dienstgüte (DG) erbracht werden kann.

2. Verfahren nach Anspruch 1,
bei dem die Nutzung des Dienstes ohne Angabe der Dienstgüte beantragt wird.

3. Verfahren nach einem der Ansprüche 1 oder 2,
bei dem der Dienst als Übermittlung von Informationen (INF), insbesondere Sprachinformationen (V) ausgebildet ist.

4. Verfahren nach einem der vorstehenden Ansprüche,
**dadurch gekennzeichnet,**
**daß** eine hohe Dienstgüte nur bei ausreichender Übermittlungskapazität im Kommunikationsnetz und andernfalls allenfalls eine niedrige Dienstgüte vergeben wird.

5. Verfahren nach einem der vorstehenden Ansprüche,
bei dem bei der Nutzung des Dienstes von dem Kommunikationsnetz zumindest ein dem Dienst zugeordneter Paketstrom (ST) mit der Dienstgüte übermittelt wird.

6. Verfahren nach Anspruch 5,
bei dem von der Steuerung die Dienstgüte des Paketstroms zumindest einer Netzübergangseinrichtung (NE) mitgeteilt und von dieser anschließend der Paketstrom mit der mitgeteilten Dienstgüte an das paketorientierte Kommunikationsnetz übermittelt wird.

7. Verfahren nach Anspruch 6,
bei dem die Netzübergangseinrichtung als Edgedevice (ED) ausgebildet ist.

8. Verfahren nach einem der Ansprüche 6 oder 7,
bei dem für die Vergabe der Dienstgüte zumindest eine Bestätigung der mitgeteilten Dienstgüte übermittelt wird.

9. Verfahren nach einem der Ansprüche 6 bis 8,
bei dem die Mitteilung der Dienstgüte mit Hilfe von Mitteilungs-Paketen (MP) erfolgt wird.

10. Verfahren nach einem der vorstehenden Ansprüche,
bei dem in dem Kommunikationsnetz zumindest ein hohe Dienstgüte (HD) und eine niedrige Dienstgüte (ND) vorgesehen ist.

11. Verfahren nach Anspruch 10 und nach einem der Ansprüche 6 bis 9, bei dem die Paketströme mit hoher Dienstgüte von der Netzübergangseinrichtung bevorzugt übermittelt werden.

12. Verfahren nach einem der vorstehenden Ansprüche,
bei dem in den Paketen ein Dienstgütekennzeichen (DK) vorgesehen ist.

13. Verfahren nach Anspruch 12, nach einem der Ansprüche 10 bis 11 und nach einem der Ansprüche 6 bis 9, bei dem von der Netzübergangseinrichtung die von ihr mit hoher Dienstgüte zu übermittelnden Paketströme mit einem die hohe Dienstgüte repräsentierenden ersten Dienstgütekennzeichen (HDK) und die verbleibenden Paketströme mit einem die niedrige Dienstgüte repräsentierenden zweiten Dienstgütekennzeichen (NDK) übermittelt werden.

14. Verfahren nach Anspruch 13,
bei dem die Dienstgüte mit Hilfe von Prioritäten (P) angezeigt wird, wobei die hohe Dienstgüte als hohen Priorität (HP) und die niedrige Dienstgüte als niedrigen Priorität (NP) und das Dienstgütekennzeichen als Prioritätskennzeichen (PK) angegeben ist.

15. Verfahren nach einem der vorstehenden Ansprüche,
bei dem die Pakete als Internet Pakete (IP) ausgebildet sind.

16. Verfahren nach einem der vorstehenden Ansprüche,
bei dem die Steuerung als Gatekeeper (GK) gemäß dem internationalen Standard H.323 ausgebildet ist.

17. Produkt - beispielsweise Steuerung (SF), Gatekeeper (GK), Endpunkt (EP), Telephon (T), Rechner (C), Netzübergangseinrichtung (NE) oder Kommunikationsnetz (KN) -, umfassend Mittel, die zur ausführung eines Verfahrens nach einem der vorstehenden Verfahrensansprüche eingerichtet sind.

18. Computerprogrammprodukt (P), umfassend als Programmcode ausgebildete Mittel, die so eingerichtet sind, dass ein Verfahren nach einem der vorstehenden Verfahrensansprüche durchgeführt wird, wenn der Programmcode in einen Arbeitsspeicher geladen und von zumindest einem Prozessor ausgeführt wird.

19. Produkt nach einem der beiden vorstehenden Ansprüche, bei dem die Mittel so eingerichtet sind, dass bei teilweiser Durchführung des Verfahrens durch das Produkt selbst in Folge einer dabei bedingten Zusammenwirkung mit zumindest einem weiteren Produkt, das zur Durchführung der restlichen Schritte des Verfahrens eingerichtet ist, das gesamte Verfahren durchgeführt wird.

## Claims

1. Method for assigning a quality of service (DG) for a service (DI), which is implemented on a packet-oriented basis in at least one communication network (KN) transmitting packets (PA) and/or packet streams (ST) as a function of qualities of service (DG), **characterised by** the following steps:
(a) a utilisation (NU) of the service is requested from a controller (SF);
(b) the quality of service as a function of the service and/or of the requested utilisation of the service is assigned by the controller for the requested utilisation of the service, the controller (SF) checking whether the requested utilisation (NU) of the service (DI) can be provided by the communication network (KN) with the intended quality of service (DG).

2. Method according to claim 1,
wherein the utilisation of the service is requested without specifying the quality of service.

3. Method according to one of claims 1 or 2,
wherein the service is designed as the transmission of information (INF), especially voice information (V).

4. Method according to one of the preceding claims,
**characterised in that**
a high quality of service is assigned only if there is sufficient transmission capacity in the communication network, and otherwise if need be a low quality of service is assigned.

5. Method according to one of the preceding claims,
wherein at least one packet stream (ST) assigned to the service is transmitted with the quality of service by the communication network when the service is used.

6. Method according to claim 5,
wherein the quality of service of the packet stream is notified by the controller to at least one gateway device (NE) and the packet stream with the notified quality of service is then transmitted by said gateway device to the packet-oriented communication network.

7. Method according to claim 6,
wherein the gateway device is designed as an edge device (ED).

8. Method according to one of claims 6 or 7,
wherein at least one confirmation of the notified quality of service is transmitted for the assignment of the quality of service.

9. Method according to of claims 6 to 8,
wherein the notification of the quality of service is performed with the aid of notification packets (MP).

10. Method according to one of the preceding claims,
wherein at least one high quality of service (HD) and one low quality of service (ND) is provided in the communication network.

11. Method according to claim 10 and according to one of claims 6 to 9, wherein the packet streams are preferably transmitted with a high quality of service by the gateway device.

12. Method according to one of the preceding claims,
wherein a quality of service indicator (DK) is provided in the packets.

13. Method according to claim 12, according to one of claims 10 to 11 and according to one of claims 6 to 9, wherein the gateway device transmits the packet streams to be transmitted by it with a high quality of service with a first quality of service indicator (HDK) representing the high quality of service and the remaining packet streams with a second quality of service indicator (NDK) representing the low quality of service.

14. Method according to claim 13,
wherein the quality of service is indicated with the aid of priorities (P), the high quality of service being specified as a high priority (HP) and the low quality of service as a low priority (NP) and the quality of service indicator as a priority indicator (PK).

15. Method according to one of the previous claims, wherein the packets are designed as Internet packets (IP).

16. Method according to one of the preceding claims, wherein the controller is designed as a gatekeeper (GK) in accordance with the international standard H.323.

17. Product - for example a controller (SF), gatekeeper (GK), endpoint (EP), telephone (T), computer (C), gateway device (NE) or communication network (KN) - comprising means which are set up to execute a method according to one of the preceding method claims.

18. Computer program product (P), comprising means designed as program code which are set up so that a method according to one of the preceding method claims is implemented if the program code is loaded into a main memory and is executed by at least one processor.

19. Product according to one of the preceding claims, wherein the means are set up so that in the event of partial execution of the method by the product itself in consequence of a restricted interoperation with at least one other product set up to implement the remaining steps of the method, the entire method is implemented.

## Revendications

1. Procédé permettant d'affecter une qualité de service (DG) pour un service (DI), qui est réalisé dans au moins un réseau de communication (KN) transmettant, de manière orientée paquets, des paquets (PA) et/ou des flux de paquets (ST) en fonction de qualités de service (DG), **caractérisé par** les étapes suivantes :
(a) une exploitation (NU) du service est demandée auprès d'une commande (SF),
(b) pour l'exploitation demandée du service, la qualité de service est affectée par la commande en fonction du service et/ou de l'exploitation demandée du service, la commande (SF) vérifiant si l'exploitation (NU) demandée du service (DI) peut être fournie par le réseau de communication (KN) avec la qualité de service (DG) prévue.

2. Procédé selon la revendication 1,
dans lequel l'exploitation du service est demandée sans indication de la qualité de service.

3. Procédé selon la revendication 1 ou 2,
dans lequel le service est exécuté comme transmission d'informations (INF), notamment d'informations vocales (V).

4. Procédé selon l'une quelconque des revendications précédentes,
**caractérisé en ce qu'**une haute qualité de service est attribuée seulement dans le cas d'une capacité de transmission suffisante dans le réseau de communication et autrement une basse qualité de service est attribuée éventuellement.

5. Procédé selon l'une quelconque des revendications précédentes,
dans lequel, lors de l'exploitation du service, au moins un flux de paquets (ST) affecté au service est transmis par le réseau de communication avec la qualité de service.

6. Procédé selon la revendication 5,
dans lequel la qualité de service du flux de paquets est communiquée par la commande à au moins un dispositif de transition de réseau (NE) et le flux de paquets est ensuite transmis par ce dernier au réseau de communication orienté paquets, avec la qualité de service communiquée.

7. Procédé selon la revendication 6,
dans lequel le dispositif de transition de réseau est exécuté comme edge device (ED).

8. Procédé selon l'une quelconque des revendications 6 ou 7,
dans lequel, pour l'affectation de la qualité de service, au moins une confirmation de la qualité de service communiquée est transmise.

9. Procédé selon l'une quelconque des revendications 6 à 8,
dans lequel la communication de la qualité de service est réalisée à l'aide de paquets de messages (MP).

10. Procédé selon l'une quelconque des revendications précédentes,
dans lequel au moins une haute qualité de service (HD) et une basse qualité de service (ND) sont prévues dans le réseau de communication.

11. Procédé selon la revendication 10 et selon l'une quelconque des revendications 6 à 9, dans lequel les flux de paquets à haute qualité de service sont transmis de manière favorisée par le dispositif de transition de réseau.

12. Procédé selon l'une quelconque des revendications précédentes,
dans lequel un critère de qualité de service (DK) est prévu dans les paquets.

13. Procédé selon la revendication 12, selon l'une quelconque des revendications 10 à 11 et selon l'une quelconque des revendications 6 à 9, dans lequel les flux de paquets à transmettre avec une haute qualité de service par le dispositif de transition de réseau sont transmis par le dispositif de transition de réseau avec un premier critère de qualité de service (HDK) représentant la haute qualité de service et les flux de paquets restants sont transmis par le dispositif de transition de réseau avec un deuxième critère de qualité de service (NDK) représentant la basse qualité de service.

14. Procédé selon la revendication 13,
dans lequel la qualité de service est indiquée à l'aide de priorités (P), la haute qualité de service étant indiquée comme haute priorité (HP) et la basse qualité de service étant indiquée comme basse priorité (NP) et le critère de qualité de service étant indiqué comme critère de priorité (PK).

15. Procédé selon l'une quelconque des revendications précédentes,
dans lequel les paquets sont exécutés comme paquets Internet (IP)

16. Procédé selon l'une quelconque des revendications précédentes,
dans lequel la commande est exécutée comme gate keeper (GK) selon la norme internationale H.323.

17. Produit - notamment commande (SF), gate keeper (GK), point terminal (EP), téléphone (T), ordinateur (C), dispositif de transition de réseau (NE) ou réseau de communication (KN) - comprenant des moyens qui sont configurés pour la mise en oeuvre d'un procédé selon l'une quelconque des revendications de procédé précédentes.

18. Produit de programme informatique (P), comprenant des moyens conçus comme code de programme, qui sont configurés pour qu'un procédé soit mis en oeuvre selon l'une quelconque des revendications de procédé précédentes lorsque le code de programme est chargé dans une mémoire de travail et est exécuté par au moins un processeur.

19. Produit selon l'une des deux revendications précédentes,
dans lequel les moyens sont configurés pour que, dans le cas de la mise en oeuvre partielle du procédé par le produit même, l'ensemble du procédé est mis en oeuvre en conséquence d'une coopération ainsi occasionnée avec au moins un autre produit qui est configuré pour la mise en oeuvre des étapes restantes du procédé.
